# EUROPEAN PATENT SPECIFICATION

(11) **EP 0 176 558 B1**
(45) Date of publication and mention of the grant of the patent: **07.01.1993**
(21) Application number: 85901797.2
(22) Date of filing: 20.03.1985
(51) Int. Cl.: A61L 2/00, A01N 59/00, C01B 11/00

(54) **DISINFECTION METHOD AND COMPOSITION THEREFOR**
DESINFEKTIONSVERFAHREN SOWIE ZUSAMMENSETZUNG DAFÜR
PROCEDE DE DESINFECTION ET COMPOSITION POUR CELUI-CI

(30) Priority: 21.03.1984 US 591787
(43) Date of publication of application: 09.04.1986
(73) Proprietor: ALCIDE CORPORATION, Norwalk, CT 06851 (US)
(72) Inventor: DAVIDSON, Eugene, A., Hummelstown, PA 17036 (US); KROSS, Robert, D., Bellmore, NY 11710 (US)
(74) Representative: West, Alan Harry
(86) International application number: US8500470
(87) International publication number: WO8504107

(56) References cited:
- GB-A- 1 448 337
- CHEMICAL ABSTRACTS, vol. 99, no. 16, 17th October 1983, page 362, abstract 128391q, Columbus, Ohio, US; & JP - A - 58 18 617 (TORAY INDUSTRIES INC.) 03-02-1983

## Description

This invention relates generally to compositions for disinfecting substrates as well as to processes for preparing and using such compositions.

The term disinfectant is used in this specification to broadly include any substance or composition that disinfects, sanitizes, deodorizes, sterilizes, or kills germs.

The use of chlorine compounds in various types of disinfectant compositions is well known. Chlorine compounds suggested for use in this regard include, for example, sodium hypochlorite, used in World War I as a wound irrigant, and chlorinated phenols such as m-chlorophenol. These compounds have increased bactericidal activity and reduced toxicity, in some instances, when compared to non-chlorinated phenols. Thus, m-chlorophenol has a phenol coefficient of 5.8 (S. aureus) to 7.4 (B. typhosus). Other chlorine compounds having some form of disinfectant utility include, for example, chlorine gas itself, chlorine dioxide, chloramine T, mercuric chloride, calcium hypochlorite (a standard swimming pool disinfectant), chloropicrin (a larvicide), chloroform (a fumigant), chlordane (an insecticide), zinc chloride (a preservative), and chloromycetin (an antibiotic).

Chlorine dioxide in particular has been found to be an especially effective disinfectant. This compound is quite versatile and has long been used as a bleaching agent such as in the oxidizing of the natural colorant present in cotton, wood pulp and other cellulosic fibrous material. Thus, chlorine dioxide, though performing an oxidizing function, is nevertheless non-injurious with respect to the fibrous material.

Additionally, chlorine dioxide has long been used in the treatment of water supplies and a precursor is currently available commercially in powder form for use in swimming pools and in liquid form for household and industrial cleaning and disinfecting. In general, chlorine dioxide is superior to gaseous chlorine in the removal of odors, tastes, and in destroying and removing algae or other organic material. Moreover, chlorine dioxide is considered at least as effective if not superior to chlorine gas as a bactericide, virucide or sporicide. Chlorine dioxide is further advantageous in that its antiseptic properties are not as sensitive to pH as chlorine, i.e., chlorine dioxide retains its disinfectant capacity to a significantly greater extent and over a wider pH range than does gaseous chlorine.

Despite the manifold advantages obtainable with the use of chlorine dioxide for the aforedescribed and related purposes, certain difficulties are nevertheless encountered in practice. Thus, chlorine dioxide as a concentrated gas is explosive and poisonous and accordingly is usually not shipped in the gaseous state to the medium or small user. It has thus become common practice to employ a chlorine dioxide-liberating compound such as sodium chlorite powder which is much safer from the standpoints of storage, shipping and handling. Generation of the chlorine dioxide from sodium chlorite or other chlorine dioxide liberating compounds is usually effected by addition of either acid, bleach (hypochlorite), or chlorine to the chlorine dioxide liberating compound.

The acid generation of chlorine dioxide is generally effected with the use of a relatively inexpensive inorganic acid, e.g., hydrochloric acid, sulfuric acid and the like. Phosphoric or acetic acid (vinegar) is sometimes recommended for home use since they are comparatively safe to handle and generally readily available.

Canadian Patent 959,238 to Callerame discloses a conventional method of producing chlorine dioxide by reacting an alkali metal or alkaline earth metal chlorite such as sodium chlorite with an acid. In general, any acid may be used including strong acids such as sulfuric acid and hydrochloric acid and relatively weak acids such as citric and tartaric.

Acid-induced generation of chlorine dioxide from sodium chlorite as heretofore recommended and practiced has proven ineffective for the most part. The composition resulting from acidification of the sodium chlorite does not usually exhibit the desired disinfectant efficacy, particularly from the standpoint of the rate of germ kill. To compensate for this deficiency, it becomes necessary to use an increased concentration of sodium chlorite and acid which may lead to toxicity problems, particularly when the composition is used in an enclosed air space.

Another problem stems from the fact that the composition obtained from the interaction of the sodium chlorite and acid material does not provide a truly effective solvent environment for the active chlorine containing products such as chlorine dioxide, chlorous acid and the like. Inhalation of these components to any significant extent can be injurious to health. Significantly, the toxicity problem imposes severe limitations on the general utility of the disinfectant composition, particularly with respect to treatment of human beings.

These prior methods result in the nearly complete and rapid conversion of the chlorite precursor to chlorine dioxide which is then used as the gas or, less frequently, in solution.

The above-noted problems with using chlorine dioxide as a disinfectant were solved to some extent by the use of a composition comprising a water soluble chlorite, such as sodium chlorite, and lactic acid. As disclosed in U.S. Patent 4,084,747 to Alliger, this particular composition possesses improved disinfectant properties, properties not attained by using the same composition but wholly replacing the lactic acid with other acids such as phosphoric acid, acetic acid, sorbic acid, fumaric acid, sulfamic acid, succinic acid, boric acid, tannic acid, and citric acid. It would be preferable from the standpoint of economics and acid availability to be able to use acids other than lactic acid, still obtain disinfectant utility, and maintain control over the rate of formation of chlorous acid and thereby chlorine dioxide.

The search has continued for improved compositions for disinfecting various germ carrying substances and improved disinfection methods. This invention was made as a result of that search.

According to the present invention, there is now provided a process for disinfecting a substrate, which comprises contacting the substrate with a composition comprising a mixture of two solutions or gels, the first solution or gel comprising a chlorine dioxide liberating compound in an amount from 0.01 to 0.3% based upon the total weight of the composition, and the second solution or gel containing an organic acid other than lactic acid, in an amount from 0.01 to 6% based upon the total weight of the composition, the organic acid having the formula: 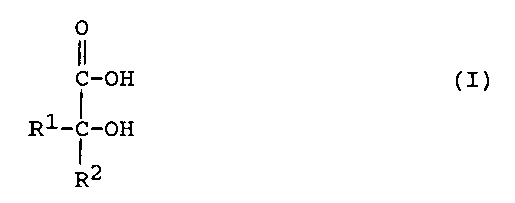
in which R¹ and R² are the same or different and are selected from hydrogen, methyl, -CH₂COOH, -CH₂OH and -CHOHCOOH or R¹ is hydrogen and R² is C₆H₅, and a pK from 2.8 to 4.2.

According to the invention, there is provided also a composition for disinfecting a substrate, the composition comprising:
(a) a chlorine dioxide liberating compound in an amount from 0.01 to 0.3% based upon the total weight of the composition;
(b) an organic acid other than lactic acid, in an amount from 0.01 to 6% based upon the total weight of the composition, the organic acid having the formula (I): 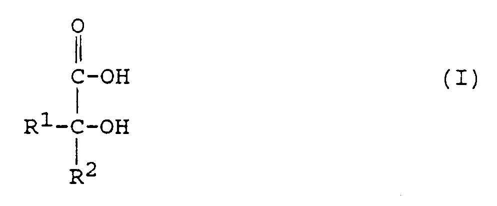 in which R¹ and R² are the same or different and are selected from hydrogen, methyl, -CH₂COOH, -CH₂OH and -CHOHCOOH or R¹ is hydrogen and R² is C₆H₅, and a pK from 2.8 to 4.2; and
(c) a vicinal polyhydroxy compound.

The present composition employs a chlorine dioxide liberating compound as one of the components of the disinfectant composition. By "chlorine dioxide liberating compound" is meant any compound which when appropriately treated will liberate chlorine dioxide. While any chlorine dioxide liberating compound may be used, water-soluble chlorites are preferred because they are readily available and inexpensive. Typical water-soluble chlorites include alkali metal chlorites and alkaline earth metal chlorites. Sodium chlorite and potassium chlorite are preferred. Sodium chlorite is particularly preferred.

The disinfectant composition may be used in conjunction with an application medium. The application medium may be any compatible medium including a gel or a liquid such as water. An aqueous application medium is preferred. The application medium may contain other additives such as chelating agents (e.g., Na₄EDTA), surfactants (e.g., Pluronic F68 or Nacconol alkylaryl sulfonate), or preservatives (e.g., sodium benzoate).

The amount of chlorine dioxide liberating compound that is used in this composition is from 0.01 to 0.3% by weight of the total composition (including the application medium).

The organic acid used in the present invention may be citric, malic, tartaric, glycolic, mandelic or other structurally similar acids as described in Formula I hereinabove. Mixtures of two or more such organic acids may also be used.

The pK of these organic acids may be generally from about 2.8 to about 4.2, and preferably from about 3.0 to about 4.0.

The amount of organic acid used should be sufficient to lower the pH of the composition to less than about 7, typically from about 2 to about 5, and preferably from about 2.2 to about 2.7. This amount corresponds to 0.01 to 6, typically from about 0.05 to about 3, and preferably from about 0.1 to about 2% by weight of the total composition (including the application medium).

The chlorine dioxide liberating compound is generally kept separate from the organic acid prior to use in order to avoid premature reaction of the ingredients.

In a preferred embodiment, the disinfectant composition contains a vicinal polyhydroxy compound, preferably a vicinal dihydroxy compound, and most preferably a dihydroxy compound with cis hydroxyl groups. Vicinal polyhydroxy compounds are well known to those skilled in this art and include dextrose and other sugars, such as xylose, galactose, mannose, lactose and ribose, hydroxyethyl cellulose, glycerin, sorbitol, inositols, and 1,2-propylene glycol.

The use of such vicinal polyhydroxy compounds in conjunction with the chlorine dioxide liberating compound and organic acid results in a synergistic composition. For example, the rate of formation of the active entity using a composition comprising sodium chlorite and mandelic acid is substantially enhanced by the addition of a relatively insubstantial amount of a vicinal polyhydroxy compound. Thus, the use of as little as 2% dextrose in the composition substantially enhances the rate of formation of the active entity vis-a-vis a composition containing only sodium chlorite and one of the organic acids discussed hereinabove. Stated otherwise, a composition with the vicinal polyhydroxy compound may be prepared having substantially the same germ-killing efficacy in a specified time period as a composition which does not contain the polyhydroxy compound even though the composition containing the polyhydroxy compound contains substantially much less organic acid and sodium chlorite.

The amount of polyhydroxy compound may vary widely but in the present invention there is employed generally less than about 50, typically from about 1 to about 20, and preferably from about 2 to about 10 percent by weight of the total composition.

The above-described compositions may be used to disinfect various substrates. The term "substrate" as used in the instant specification is intended to cover any type of surface or carrier which could provide a locus for the accumulation of germs, virus, spores, bacteria, fungi, i.e, all types of parasitic microorganisms. Obvious examples include surgical and dental instruments, food containers, human and animal skin, tissue and mucous membranes (mouth tissue), swimming pools, household sinks, garbage containers, bathroom appliances, etc. Cleaning action may be enhanced by the addition of a wetting agent, the latter being compatible with and devoid of any tendency to react with chlorine dioxide. Particularly effective wetting agents for such use are anionic surfactants which are commercially available. The instant compositions in aerosol form may be effectively used to destroy airborne or atmospheric germs such as carried within an enclosed air space.

When these compositions are used on human or animal skin, they may also be typically applied in conjunction with a gel application medium because of the ability of the gel to adhere to the skin. Any gelling agent or thickener which is non-toxic and non-reactive with the chlorine dioxide-liberating compound and organic acid may be used. Cellulose gels, particularly methyl cellulose gels, polyamide and silica-based gels, are preferred. Preservatives may also be used when the gel form is employed. For example, sodium benzoate may be used as a preservative in the organic acid gel.

The amount of thickener in the gel varies depending upon the particular acid and chlorine dioxide liberating compound employed. However, the amount may be generally from about 0.5 to about 8, typically from about 2 to about 3, and preferably from about 2.5 to about 2.7 percent by weight of the gel. The amount of preservative in the gel may be generally from about 0.01 to about 0.05, typically from about 0.01 to about 0.04, and preferably from about 0.02 to about 0.03 percent by weight of the total composition.

When the chlorine-dioxide liberating compound and organic acid are present in separate gels, the amounts of each present in the respective gels are adjusted so that when the gels are mixed the specified percentages will be present in the resulting composition. For example, when the gels are designed to be mixed in equal parts, which is preferred, the amount of chlorine dioxide liberating compound present in the first gel may be generally from about 0.02 to about 2, typically from about 0.05 to about 1, and preferably from about 0.1 to about 0.6 percent by weight of the first gel. The amount of organic acid present in the second gel may be from about 0.1 to about 12, typically from about 0.5 to about 10, and preferably from about 1 to about 6 percent by weight of the second gel.

Additionally, when the chlorine dioxide liberating compound and organic acid are present in separate gels, the preservative is present in only that gel which contains the organic acid and the thickener is present in both gels.

Therefore, when the gels are designed to be mixed in equal parts, the amount of preservative present in the second gel, the organic acid gel, is generally from about 0.02 to about 0.1, typically from about 0.02 to about 0.08, and preferably from about 0.04 to about 0.06 percent by weight of the second gel and the amount of thickener present in both the first and second gels is generally from about 0.5 to about 4, typically from about 2 to about 3, and preferably from about 2.5 to about 2.7 percent by weight of each gel.

These gels may be mixed just prior to application or may be simultaneously mixed and applied in situ.

A small but effective amount of the composition may be applied to the affected area of the skin using any means known to those skilled in this art, including, for example, an applicator such as a cotton swab. The composition is allowed to remain on the affected area for a sufficient period of treatment. The composition may be reapplied to maintain an effective level of the composition throughout the period of treatment.

For most skin irritations, a frequency of one or two applications provides relief. In most cases the composition may be applied liberally to the site, preferably as soon as possible after the inflammation appears. If liquid is applied, a suitable applicator is a cotton gauze soaked with a liquid formulation. The lesion or affected area should be kept in contact with the wet gauze for a few minutes.

When gel is used, it should be liberally applied. If the gel is absorbed or accidentally removed, it may be reapplied as necessary.

These compositions may also be used in soap products, toothpastes, mouthwashes, and the like.

In addition to the gel and solution form, the chlorine dioxide liberating compound and the organic acid may also be provided in powder form in two packets or in a two compartment single package wherein the compartments are separated by a suitable seal. One embodiment of such a package uses a water soluble, heat sealable, polyvinyl alcohol-cellulose as the package material. Other suitable packaging materials compatible with the composition ingredients are well known to those skilled in this art.

The package material may contain vicinal hydroxy groups and thus serve additionally as a synergist.

The present invention is illustrated by the following Example. All parts and percentages in the Example as well as the specification and claims are by weight unless specified otherwise.

### EXAMPLE

This Example illustrates the use of the present composition as a mouthwash.

A first solution is prepared by dissolving 0.4 grams of technical grade sodium chlorite, 0.17 grams of powdered Na₄EDTA 4H₂O, 0.5 grams of l-carvone (mint flavor) and the appropriate amount of a compatible food grade yellow dye in 500 milliliters of aqueous solution. A second solution is prepared by dissolving 1.375 grams of anhydrous citric acid and the appropriate amount of FD&C blue in a batch of 500 milliliters of a 10 percent by weight aqueous solution of glycerin.

The two solutions are mixed, preferably just prior to use, in substantially equal amounts and the mixture is used in the normal manner as a mouthwash. This results in improved bactericidal, fungicidal, and taste properties over presently available commercial antiseptic mouthwashes.

## Claims

1. A process for disinfecting a substrate, which comprises contacting the substrate with a composition comprising a mixture of two solutions or gels, the first solution or gel comprising a chlorine dioxide liberating compound in an amount from 0.01 to 0.3% based upon the total weight of the composition, and the second solution or gel containing an organic acid other than lactic acid, in an amount from 0.01 to 6% based upon the total weight of the composition, the organic acid having the formula: 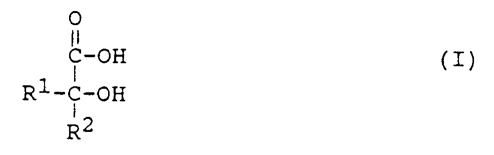 in which R¹ and R² are the same or different and are selected from hydrogen, methyl, -CH₂COOH, -CH₂OH and -CHOHCOOH or R¹ is hydrogen and R² is C₆H₅, and a pK from 2.8 to 4.2.

2. A process according to claim 1 wherein the organic acid is at least one of citric, malic, tartaric, glycolic, and mandelic acids.

3. A process according to claim 1 or claim 2, wherein the pK is from 3 to 3.9.

4. A process according to any one of claims 1 to 3, wherein the chlorine dioxide liberating compound is a water-soluble chlorite.

5. A process according to claim 4, wherein the water-soluble chlorite is sodium chlorite.

6. A process according to any one of claims 1 to 5, wherein the chlorine dioxide liberating compound and the organic acid are both in powder form.

7. A composition for disinfecting a substrate, the composition comprising:
(a) a chlorine dioxide liberating compound in an amount from 0.01 to 0.3% based upon the total weight of the composition;
(b) an organic acid other than lactic acid, in an amount from 0.01 to 6% based upon the total weight of the composition, the organic acid having the formula (I): 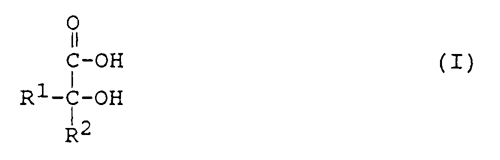 in which R¹ and R² are the same or different and are selected from hydrogen, methyl, -CH₂COOH, -CH₂OH and -CHOHCOOH or R¹ is hydrogen and R² is C₆H₅, and a pK from 2.8 to 4.2; and
(c) a vicinal polyhydroxy compound.

8. A composition according to claim 7, wherein the organic acid is at least one of citric, malic, tartaric, glycolic, and mandelic acids.

9. A composition according to claim 7 or claim 8, wherein the pK is from 3 to 3.9.

10. A composition according to any one of claims 7 to 9, wherein the chlorine dioxide liberating compound is a water-soluble chlorite.

11. A composition according to claim 10, wherein the water-soluble chlorite is sodium chlorite.

12. A composition according to any one of claims 7 to 11, wherein the vicinal polyhydroxy compound is a dihydroxy compound.

13. A composition according to any one of claims 7 to 12, wherein the vicinal polyhydroxy compound is at least one of dextrose, xylose, galactose, mannose, lactose, ribose, glycerin, sorbitol, inositols and 1,2-propylene glycol.

14. A composition according to any one of claims 7 to 13, wherein the chlorine dioxide liberating compound and the organic acid are both in powder form.

15. A composition according to any one of claims 7 to 14, wherein the chlorine dioxide liberating compound and the organic acid are in a two-compartment, single package and wherein the compartments are separated by a heat-sealed closure.

16. A process for disinfecting a substrate, which comprises contacting the substrate with a composition according to any one of claims 7 to 15.

## Patentansprüche

1. Verfahren zur Desinfektion eines Substrates, welches das in Kontaktbringen des Substrates mit einer Zusammensetzung umfaßt, die eine Mischung zweier Lösungen oder Gele umfaßt, wobei die erste Lösung oder Gel eine Chlordioxid freisetzende Verbindung in einer Menge zwischen 0,01 und 0,3 %, wobei das Gesamtgewicht der Zusammensetzung zugrunde gelegt ist, umfaßt, und die zweite Lösung oder Gel eine organische Säure, die nicht Milchsäure ist, in einer Menge zwischen 0,01 und 6 %, wobei das Gesamtgewicht der Zusammensetzung zugrunde gelegt ist, umfaßt, wobei die organische Säure die Formel aufweist: 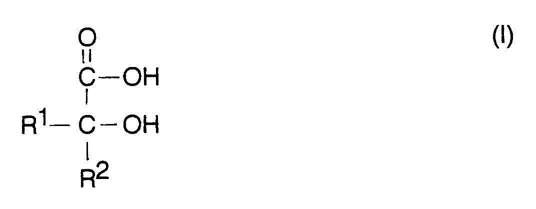 in welcher R¹ und R² gleich oder unterschiedlich sind und ausgewählt sind aus Wasserstoff, Methyl, -CH₂COOH, -CH₂OH und -CHOHCOOH oder R¹ Wasserstoff und R² C₆H₅ ist und einen pK-Wert von 2,8 bis 4,2 aufweist.

2. Verfahren nach Anspruch 1, worin die organische Säure mindestens eine aus der Gruppe Zitronensäure, Äpfelsäure, Weinsäure, Glykolsäure und Mandelsäure umfaßt.

3. Verfahren nach Anspruch 1 oder Anspruch 2, worin der pK-Wert zwischen 3 und 3,9 liegt.

4. Verfahren nach einem der Ansprüche von 1 bis 3, worin die Chlordioxid freisetzende Verbindung ein wasserlösliches Chlorit ist.

5. Verfahren nach Anspruch 4, worin das wasserlösliche Chlorit Natriumchlorit ist.

6. Verfahren nach einem der Ansprüche 1 bis 5, worin die Chlordioxid freisetzende Verbindung und die organische Säure beide in Pulverform vorliegen.

7. Zusammensetzung zur Desinfektion eines Substrates, wobei die Zusammensetzung umfaßt:
(a) eine Chlordioxid freisetzende Verbindung in einer Menge zwischen 0,01 und 0,3 % bezogen auf das Gesamtgewicht der Zusammensetzung;
(b) eine organische Säure, die nicht Milchsäure ist, in einer Menge zwischen 0,01 und 6 % bezogen auf das Gesamtgewicht der Zusammensetzung, wobei die organische Säure die Formel aufweist (I): 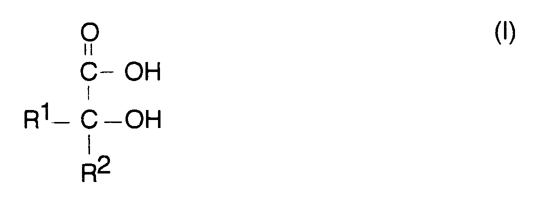 in welcher R¹ und R² gleich oder unterschiedlich sind und ausgewählt sind aus Wasserstoff, Methyl, -CH₂COOH, -CH₂OH und -CHOHCOOH oder R¹ Wasserstoff und R² C₆H₅ ist und einen pK-Wert von 2,8 bis 4,2 aufweist;
(c) eine Verbindung mit direkt benachbarten Polyhydroxygruppen.

8. Zusammensetzung nach Anspruch 7, worin die organische Säure mindestens eine aus der Gruppe Zitronensäure, Äpfelsäure, Weinsäure, Glykolsäure und Mandelsäure umfaßt.

9. Zusammensetzung nach Anspruch 7 oder Anspruch 8, worin der pK-Wert zwischen 3 und 3,9 liegt.

10. Zusammensetzung nach einem der Ansprüche 7 bis 9, worin die Chlordioxid freisetzende Verbindung ein wasserlösliches Chlorit ist.

11. Zusammensetzung nach Anspruch 10, worin das wasserlösliche Chlorit Natriumchlorit ist.

12. Zusammensetzung nach einem der Ansprüche 7 bis 11, worin die Polyhxdroxyverbindung mit benachbarten Hydroxygrppen eine Dihxdroxyverbindung ist..

13. Zusammensetzung nach einem der Ansprüche 7 bis 12, worin die Verbindung mit direkt benachbarten Polyhxdroxygruppen eine aus der Gruppe Dextrose, Xylose, Galaktose, Mannose, Laktose, Ribose, Glyzerin, Sorbitol, Inositole und 1,2-Propylenglykol ist.

14. Zusammensetzung nach einem der Ansprüche 7 bis 13, worin die Chlordioxid freisetzende Verbindung und die organische Säure beide in Pulverform vorliegen.

15. Zusammensetzung nach einem der Ansprüche 7 bis 14, worin die Chlordioxid freisetzende Verbindung und die organische Säure in einem aus zwei Abteilungen bestehenden, einzigen Päckchen vorliegen und worin die Abteilungen durch einen durch Hitze verschlossenen Abschluß getrennt sind.

16. Verfahren zur Desinfektion eines Substrates, welches umfaßt, das Substrat mit einer Zusammensetzung nach einem der Ansprüche 7 bis 15 in Kontakt zu bringen.

## Revendications

1. Procédé de désinfection d'un substrat, qui consiste à faire entrer le substrat en contact avec une composition comprenant un mélange de deux solutions ou de deux gels, la première solution ou le premier gel comprenant un composé libérant du dioxyde de chlore, en une quantité de 0,01 à 0,3 % sur la base du poids total de la composition, et la seconde solution ou le second gel contenant un acide organique autre que l'acide lactique, en une quantité de 0,01 à 6 % sur la base du poids total de la composition, l'acide organique répondant à la formule : 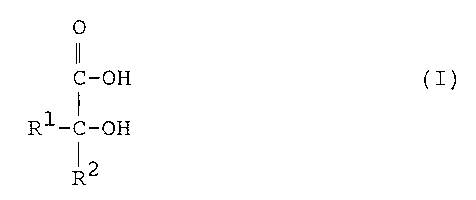 dans laquelle R¹ et R² sont identiques ou différents et sont choisis entre l'hydrogène et des groupes méthyle, -CH₂COOH, -CH₂OH et -CHOHCOOH ou bien R¹ est l'hydrogène et R² est le groupe C₆H₅, et ayant un pK de 2,8 à 4,2.

2. Procédé suivant la revendication 1, dans lequel l'acide organique est au moins l'un des acides citrique, malique, tartrique, glycolique et mandélique.

3. Procédé suivant la revendication 1 ou la revendication 2, dans lequel le pK a une valeur de 3 à 3,9.

4. Procédé suivant l'une quelconque des revendications 1 à 3, dans lequel le composé libérant du dioxyde de chlore est un chlorite soluble dans l'eau.

5. Procédé suivant la revendication 4, dans lequel le chlorite soluble dans l'eau est le chlorite de sodium.

6. Procédé suivant l'une quelconque des revendications 1 à 5, dans lequel le composé libérant du dioxyde de chlore et l'acide organique sont tous deux sous forme de poudre.

7. Composition pour la désinfection d'un substrat, cette composition comprenant :
(a) un composé libérant du dioxyde de chlore en une quantité de 0,01 à 0,3 % sur la base du poids total de la composition ;
(b) un acide organique autre que l'acide lactique, en une quantité de 0,01 à 6 % sur la base du poids total de la composition, l'acide organique répondant à la formule (I) : 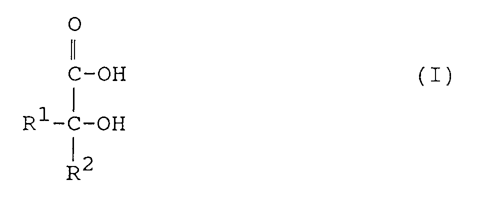 dans laquelle R¹ et R² sont identiques ou différents et sont choisis entre l'hydrogène et les groupes méthyle, -CH₂COOH, -CH₂OH et -CHOHCOOH ou bien R¹ est l'hydrogène et R² est le groupe C₆H₅, et ayant un pK de 2,8 à 4,2 ; et
(c) un composé polyhydroxylique vicinal.

8. Composition suivant la revendication 7, dans laquelle l'acide organique est au moins l'un des acides citrique, malique, tartrique, glycolique et mandélique.

9. Composition suivant la revendication 7 ou la revendication 8, dans laquelle le pK a une valeur de 3 à 3,9.

10. Composition suivant l'une quelconque des revendications 7 à 9, dans laquelle le composé libérant du dioxyde de chlore est un chlorite soluble dans l'eau.

11. Composition suivant la revendication 10, dans laquelle le chlorite soluble dans l'eau est le chlorite de sodium.

12. Composition suivant l'une quelconque des revendications 7 à 11, dans laquelle le composé polyhydroxylique vicinal est un composé dihydroxylique.

13. Composition suivant l'une quelconque des revendications 7 à 12, dans laquelle le composé polyhydroxylique vicinal est au moins l'un des composés dextrose, xylose, galactose, mannose, lactose, ribose, glycérol, sorbitol, inositols et 1,2-propylène-glycol.

14. Composition suivant l'une quelconque des revendications 7 à 13, dans laquelle le composé libérant du dioxyde de chlore et l'acide organique sont tous deux sous forme de poudre.

15. Composition suivant l'une quelconque des revendications 7 à 14, dans laquelle le composé libérant du dioxyde de chlore et l'acide organique sont dans un emballage unique à deux compartiments et les compartiments sont séparés par une cloison soudée à la chaleur.

16. Procédé de désinfection d'un substrat, qui consiste à faire entre le substrat en contact avec une composition suivant l'une quelconque des revendications 7 à 15.
